(19) Europäisches Patentamt
European Patent Office
Office européen des brevets

(11) **EP 4 095 656 A1**

(12) **EUROPEAN PATENT APPLICATION**
published in accordance with Art. 153(4) EPC

(43) Date of publication:
**30.11.2022 Bulletin 2022/48**

(21) Application number: **21889351.9**

(22) Date of filing: **03.08.2021**

(51) International Patent Classification (IPC):
*G06F 3/0362* (2013.01)    *G06F 3/038* (2013.01)
*H01H 19/14* (2006.01)

(52) Cooperative Patent Classification (CPC):
**G06F 3/0362; G06F 3/038; H01H 19/14**

(86) International application number:
**PCT/KR2021/010113**

(87) International publication number:
**WO 2022/097883 (12.05.2022 Gazette 2022/19)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 09.11.2020   KR 20200148603
09.02.2021   KR 20210018172
02.08.2021   KR 20210101414

(71) Applicant: **CK Materials Lab Co., Ltd.**
**Ansan-si, Gyeonggi-do 15427 (KR)**

(72) Inventors:
• **KIM, Jeen Gi**
**Seoul 08380 (KR)**
• **KIM, Hyeong Jun**
**Seoul 08380 (KR)**
• **SEO, Hyuk Jin**
**Seoul 08380 (KR)**

(74) Representative: **Marks & Clerk LLP**
**15 Fetter Lane**
**London EC4A 1BW (GB)**

(54) **MAGNETORHEOLOGICAL FLUID ROTATION LOAD DEVICE AND CONTROL METHOD THEREFOR**

(57) Provided are a magnetorheological fluid rotational load device and a method of controlling the same. The magnetorheological fluid rotational load device includes a housing, a yoke fixed in the housing, a shaft rotatably mounted at the center in the housing, one or more rotation rings connected to the shaft to rotate in association with rotation of the shaft, a coil disposed in the housing, a magnetorheological fluid filling the housing.

FIG. 2

# Description

## TECHNICAL FIELD

The present invention relates to a magnetorheological fluid rotational load device and a method of controlling the same, and more particularly, to a magnetorheological fluid rotational load device including a magnetorheological fluid and being capable of adjusting a rotation torque by applying a magnetic field to the magnetorheological fluid, and a method of controlling the same.

## BACKGROUND ART

Due to the gradual diversification of user interfaces used in vehicles, a jog dial, which has been mainly used in home appliances, is being introduced into vehicles as a main input device of a driver information system (DIS) such as a telematics system.

The jog dial has a rotatable circular dial shape, and a user rotates the dial clockwise/counterclockwise to select a certain function. When the user releases a force applied to the jog dial, the dial may stay at a specific position, thereby enabling precise positioning.

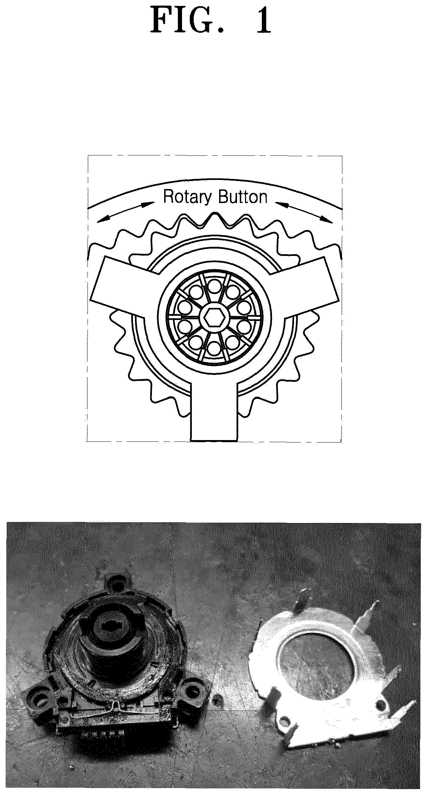

FIG. 1 is a schematic view of a general jog dial. The general mechanical jog dial operates by gear meshing. As such, the general mechanical jog dial expresses a single rotational tactile sensation due to gear meshing and may not express various rotational tactile sensations and modes of use. In addition, the mechanical jog dial only has a fixed rotation torque based on gear meshing, and may not freely change the rotation torque. Even when a driving means, e.g., a motor, for controlling a rotation torque or a vibration motor for providing a haptic function is added, an increase in production cost and device volume may be caused due to the addition of components and devices.

## DETAILED DESCRIPTION OF THE INVENTION

## TECHNICAL PROBLEM

The present invention provides a magnetorheological fluid rotational load device capable of generating various tactile patterns based on various input signals during rotation to provide various and delicate tactile sensations to a user unlike a general mechanical structure which generates a simple and single tactile pattern, and a method of controlling the same.

The present invention also provides a magnetorheological fluid rotational load device having embedded a haptic function therein to change a rotation torque, reduce a production cost, and easily reduce a device size, and a method of controlling the same.

The present invention also provides a magnetorheological fluid rotational load device capable of enabling various applications for different purposes by using a shear property or a viscosity of a magnetorheological fluid, and a method of controlling the same.

However, the scope of the present invention is not limited thereto.

## TECHNICAL SOLUTION

According to an aspect of the present invention, there is provided a magnetorheological fluid rotational load device including a housing, a yoke fixed in the housing, a shaft rotatably mounted in the housing, one or more rotation rings connected to the shaft to rotate in association with rotation of the shaft, a coil disposed in the housing, a magnetorheological fluid filling at least part of the housing, wherein at least a part of the housing is made of a magnetic material.

According to an embodiment of the present invention, a content of magnetic particles in the magnetorheological fluid may be 60 wt% to 95 wt%.

According to an embodiment of the present invention, when a content of magnetic particles in the magnetorheological fluid is increased, a rotation torque acting between the yoke and the rotation rings may be increased.

According to an embodiment of the present invention, a size of a certain gap between at least the yoke and the rotation rings, which is filled with the magnetorheological fluid, may be 10 times to 100 times greater than an average diameter of magnetic particles in the magnetorheological fluid.

According to an embodiment of the present invention, when a viscosity of the magnetorheological fluid is increased, a rotation torque acting between the yoke and the rotation rings may be increased.

According to an embodiment of the present invention, at least one of a viscosity of the magnetorheological fluid, numbers of yokes and rotation rings, areas of the yoke and the rotation rings, a size of a gap between the yoke and the rotation rings, and an intensity of a current applied to the coil may be set to prevent rotation by a user in a specific situation by increasing a maximum value of a rotation torque acting between the yoke and the rotation rings.

According to an embodiment of the present invention, the magnetorheological fluid rotational load device may further include a controller for controlling a magnetic field applied by the coil to the magnetorheological fluid.

According to an embodiment of the present invention, the controller may transmits a pre-input signal to the coil before operation of the magnetorheological fluid rotational load device, and the pre-input signal may be a signal for controlling settled particles of the magnetorheological fluid to form an incomplete or complete chain shape in a certain gap in at least one of vertical and horizontal directions and then to be redistributed.

According to an embodiment of the present invention, the incomplete chain shape may include a spike shape.

According to an embodiment of the present invention, when an operating voltage V1 is to be applied to the coil, upon determining that a height of chains formed by particles of the magnetorheological fluid in a certain gap between the yoke and the rotation rings is less than a height of the gap, the controller may apply a voltage V2 higher than V1.

According to an embodiment of the present invention, when a temperature is increased compared to a default operating temperature of the magnetorheological fluid rotational load device, the controller may maintain a torque strength of the default operating temperature by controlling an intensity or a pattern of the magnetic field.

According to an embodiment of the present invention, the one or more rotation rings may be connected to the shaft at an interval from each other, and the yoke may have a shape including first surfaces facing outer circumferential surfaces of the rotation rings, and second surfaces facing rotational surfaces of the rotation rings and being perpendicular to the first surfaces.

According to an embodiment of the present invention, the yoke may be disposed at an outer side of the rotation rings, and the coil may be disposed between the yoke and a vertical inner side of the housing.

According to an embodiment of the present invention, the one or more rotation rings may be connected to the shaft at an interval from each other, and the yoke may have a shape including first surfaces facing outer circumferential surfaces of the rotation rings, and a second surface not facing the outer circumferential surfaces of the rotation rings.

According to an embodiment of the present invention, the yoke may be disposed at a vertical inner side of the housing, the coil may be disposed between the second surface of the yoke and the shaft, and protectors may be connected onto surfaces of the coil facing rotational surfaces of the rotation rings.

According to an embodiment of the present invention, the yoke may include at least one yoke ring, the yoke ring and the rotation rings may alternate with each other along a vertical direction to form a certain gap between, and the yoke may be disposed at an outer side of the rotation rings, and the coil may be disposed between the yoke and a vertical inner side of the housing.

According to an embodiment of the present invention, when the coil applies a magnetic field to the magnetorheological fluid, particles of the magnetorheological fluid may form chains in a vertical direction to increase a rotation torque acting between the yoke and the rotation rings.

According to an embodiment of the present invention, fluid passage holes may be formed in at least one of rotational surfaces of the rotation rings and surfaces of the yoke facing the rotational surfaces of the rotation rings, and the magnetorheological fluid may be disposed in the fluid passage holes and a certain gap between the yoke and the rotation rings and increases a rotation torque acting between the yoke and the rotation rings by forming chains in the gap and the fluid passage holes in a vertical direction when a magnetic field is applied.

According to an embodiment of the present invention, the fluid passage holes may be formed at an angle of 30° to 80° in the rotational surfaces of the rotation rings or the surfaces of the yoke facing the rotational surfaces of the rotation rings.

According to an embodiment of the present invention, (1) protrusion patterns may be formed on rotational surfaces of the rotation rings or surfaces of the yoke facing the rotational surfaces of the rotation rings, or (2) protrusion patterns may be formed on the rotational surfaces of the rotation rings and the surfaces of the yoke facing the rotational surfaces of the rotation rings to face each other or alternate with each other.

According to an embodiment of the present invention, protrusion patterns may be formed in a plurality of regions on at least one of rotational surfaces of the rotation rings and surfaces of the yoke facing the rotational surfaces of the rotation rings.

According to an embodiment of the present invention, the magnetorheological fluid rotational load device may further include a bearing disposed on the housing and having inserted a body of the shaft therethrough to control a rotational friction force.

## ADVANTAGEOUS EFFECTS

As described above, according to the present invention, unlike a general mechanical structure which generates a simple and single tactile pattern, various tactile patterns may be generated based on various input signals during rotation, and thus various and delicate tactile sensations may be provided to a user.

Furthermore, according to the present invention, due to an embedded haptic function, a rotation torque may be changed, a production cost may be reduced, and a device size may be easily reduced.

In addition, according to the present invention, various applications for different purposes may be enabled using a shear property or a viscosity of a magnetorheological fluid.

However, the scope of the present invention is not limited to the above effects.

## DESCRIPTION OF THE DRAWINGS

FIG. 1 is a schematic view of a general jog dial.
FIG. 2 is a schematic perspective view of a magnetorheological fluid rotational load device according to a first embodiment of the present invention.
FIG. 3 is a schematic exploded view of the magnetorheological fluid rotational load device according to the first embodiment of the present invention.

FIG. 4 is a schematic cross-sectional view of the magnetorheological fluid rotational load device according to the first embodiment of the present invention.

FIG. 5 is a magnified view of portion V of FIG. 4.

FIG. 6 includes schematic views showing the behavior of a magnetorheological fluid in a gap space, according to an embodiment of the present invention.

FIG. 7 is a schematic exploded view of a magnetorheological fluid rotational load device according to a second embodiment of the present invention.

FIG. 8 is a schematic cross-sectional view of the magnetorheological fluid rotational load device according to the second embodiment of the present invention.

FIG. 9 is a magnified view of portion VI of FIG. 8.

FIG. 10 is a schematic perspective view of a magnetorheological fluid rotational load device according to a third embodiment of the present invention.

FIG. 11 is a schematic exploded view of the magnetorheological fluid rotational load device according to the third embodiment of the present invention.

FIG. 12 is a schematic cross-sectional view of the magnetorheological fluid rotational load device according to the third embodiment of the present invention.

FIG. 13 is a magnified view of portion VII of FIG. 12.

FIG. 14 includes schematic views showing yokes and a rotation ring having fluid passage holes, and schematic views showing shapes of magnetic chains in fluid passage holes, according to an embodiment of the present invention.

FIG. 15 includes graphs showing torque values before and after fluid passage holes are formed, according to a test example.

FIG. 16 includes schematic views showing pattern shapes on horizontal surfaces of a yoke and a rotation ring, according to an embodiment of the present invention.

FIG. 17 includes graphs showing a torque value based on a viscosity of a magnetorheological fluid, according to a test example of the present invention.

FIG. 18 is a schematic view showing that magnetic particles settled in a magnetorheological fluid are redistributed due to application of a pre-input signal, according to an embodiment of the present invention.

FIG. 19 includes photographic images showing that a magnetorheological fluid has a spike shape when a pre-input signal is applied, according to an embodiment of the present invention.

FIG. 20 is a graph showing a torque value based on a temperature of a magnetorheological fluid, according to a test example of the present invention.

FIG. 21 is a graph showing a torque value when a magnetorheological fluid rotational load device is applied to an anti-lock braking system (ABS), according to an embodiment of the present invention.

FIG. 22 is a schematic view of a magnetorheological fluid rotational load module according to an embodiment of the present invention.

FIG. 23 includes schematic views showing applications of a magnetorheological fluid rotational load device, according to various embodiments of the present invention.

<EXPLANATION OF REFERENCE NUMERALS>

10: Magnetorheological fluid
11: Magnetic particles
12: Fluid
100, 200, 300: Magnetorheological fluid rotational load device
110, 210, 310: Housing
120, 220, 320: Shaft
130, 230, 330: Coil
140. 240, 340: Yoke
150, 250, 350: Rotation ring
G: Gap

MODE OF THE INVENTION

The following detailed description of the invention will be made with reference to the accompanying drawings illustrating specific embodiments of the invention by way of example. These embodiments will be described in sufficient detail such that the invention may be carried out by one of ordinary skill in the art. It should be understood that various embodiments of the invention are different but do not need to be mutually exclusive. For example, a specific shape, structure, or characteristic described herein in relation to an embodiment may be implemented as another embodiment without departing from the scope of the invention. In addition, it should be understood that positions or arrangements of individual elements in each disclosed embodiment may be changed without departing from the scope of the invention. Therefore, the following detailed description should not be construed as being restrictive and, if appropriately described, the scope of the invention is defined only by the appended claims and equivalents thereof. In the drawings, like reference numerals denote like functions, and lengths, areas, thicknesses, and shapes may be exaggerated for convenience's sake.

Hereinafter, the present invention will be described in detail by explaining embodiments of the invention with reference to the attached drawings, such that one of ordinary skill in the art may easily carry out the invention.

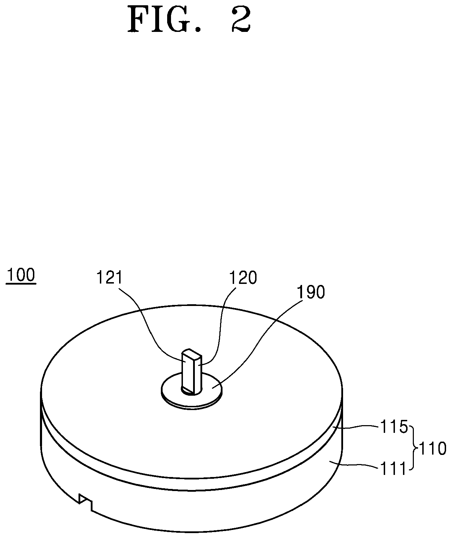

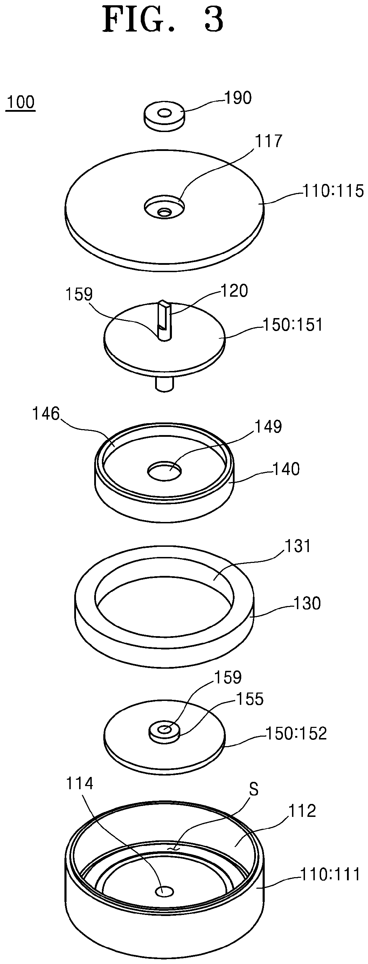

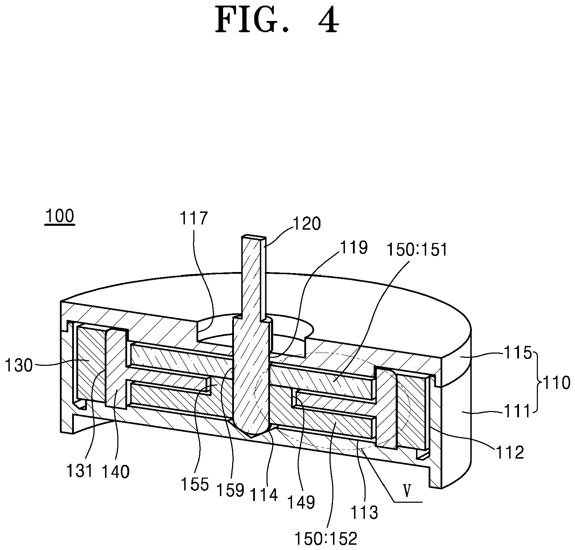

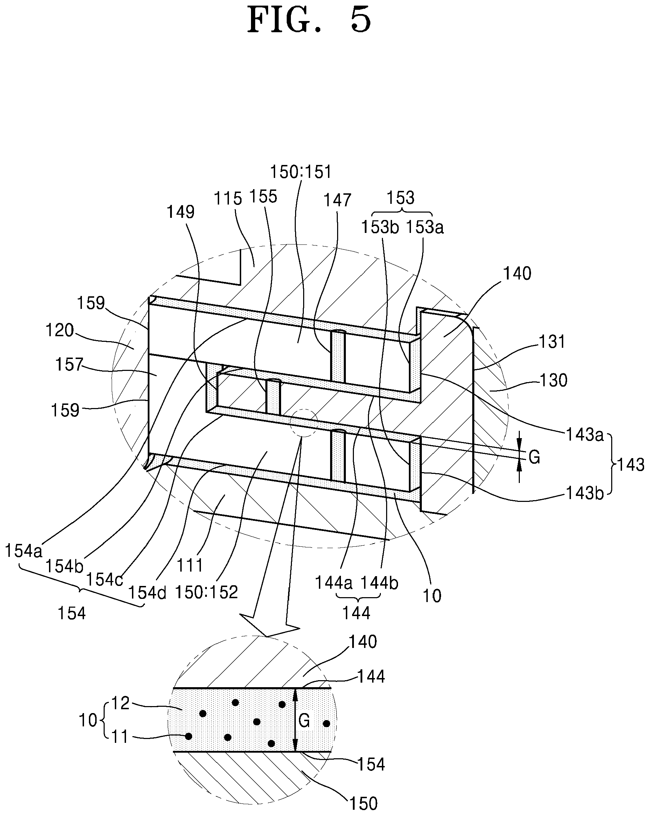

FIG. 2 is a schematic perspective view of a magnetorheological fluid rotational load device 100 according to a first embodiment of the present invention. FIG. 3 is a schematic exploded view of the magnetorheological fluid rotational load device 100 according to the first embodiment of the present invention. FIG. 4 is a schematic cross-sectional view of the magnetorheological fluid rotational load device 100 according to the first embodiment of the present invention. FIG. 5 is a magnified view of portion V of FIG. 4.

Referring to FIGS. 2 to 5, the magnetorheological fluid rotational load device 100 of the first embodiment may include a housing 110, a shaft 120, a coil 130, a yoke 140, rotation rings 150, and a magnetorheological fluid 10, and further include a bearing 190.

The housing 110 provides therein a space S where other elements are disposed. The elements of the magnetorheological fluid rotational load device 100 may be disposed in the housing 110, and the magnetorheological fluid 10 may fill the remaining empty space of the housing 110. The housing 110 may have an almost cylindrical shape to provide the space S where the shaft 120 and the rotation rings 150 may rotate, or have any other shape as long as the space S where the shaft 120 and the rotation rings 150 may rotate is provided therein.

For example, the housing 110: 111, 115 may include a first housing 111 for providing therein the space S where the coil 130, the yoke 140, the rotation rings 150, and the magnetorheological fluid 10 are disposed, and a second housing 115 for covering the top of the first housing 111 to seal the internal space S of the first housing 111.

After the elements of the magnetorheological fluid rotational load device 100 and the magnetorheological fluid 10 are disposed in the space S of the first housing 111, the open top of the first housing 111 may be covered by the second housing 115 to seal the internal space S. According to the present invention, the magnetorheological fluid 10 may be sealed and an assembly process of the magnetorheological fluid rotational load device 100 may be completed by using a simple structure of the first and second housings 110: 111, 115.

The shaft 120 may be rotatably mounted at the center in the housing 110. The shaft 120 extends in a vertical direction, and may rotate together with the rotation rings 150: 151, 152 fitted on a body of the shaft 120. Alternatively, the shaft 120 and the rotation rings 150 may be integrated with each other. An edge 121 may be provided at an upper portion of the shaft 120, and a user grip (not shown) such as a dial may be put on the edge 121 of the shaft 120 to easily transmit a rotation force to the body of the shaft 120. A lower portion of the shaft 120 may be seated in a shaft trough 114 provided on a lower surface of the first housing 111, to support the body of the shaft 120 not to be dislocated from the shaft trough 114 during rotation.

The coil 130 may be disposed in the housing 110. To uniformly apply a magnetic field in the housing 110, the coil 130 may have a shape corresponding to a vertical inner wall 112 of the housing 110, e.g., a ring shape with an opening, but is not limited thereto. The coil 130 may be a solenoid coil for forming a magnetic field in a vertical direction (or a shaft body direction) when a current is applied. Due to the vertical magnetic field, particles 11 of the magnetorheological fluid 10 may form chain structures along the vertical direction (or the shaft body direction) to control a rotation torque.

The yoke 140 may be fixed in the housing 110. An outer surface of the yoke 140 may face and be fixed to an inner surface 131 of the opening of the coil 130.

The yoke 140 may have a shape including at least first surfaces 143 and second surfaces 144 (see FIG. 5) facing the rotation rings 150: 151, 152 to be described below. In other words, an inner surface of the yoke 140 may include at least the first surfaces 143 and the second surfaces 144. Specifically, the yoke 140 may have a shape including the first surfaces 143: 143a, 143b facing outer circumferential surfaces 153: 153a, 153b (see FIG. 5) of the rotation rings 150: 151, 152, and the second surfaces 144: 144a, 144b facing rotational surfaces 154: 154a, 154b, 154c, 154d of the rotation rings 150: 151, 152 and being perpendicular to the first surfaces 143. A through hole 149 through which the shaft 120 penetrates may be provided at the center of the yoke 140.

From another point of view, in addition to the circular disk shape with the through hole 149, a vertical wall 146 may be formed in a cylindrical shape in a vertical direction from an outer circumference of the circular disk and thus a cross-section of the yoke 140 (see FIG. 4 reference) may have an almost 'H' shape except for the through hole 149. To increase an area of surfaces facing each other, the rotation rings 150 may be seated in an internal space formed by the vertical wall 146 of the yoke 140.

The rotation rings 150 may have a circular disk shape overall and be connected to the shaft 120. The rotation rings 150: 151, 152 may be provided with through holes 159 corresponding to an outer diameter of the body of the shaft 120, and thus be fitted on the shaft 120. The rotation rings 150 may rotate in association with rotation of the shaft 120 relative to the fixed yoke 140.

A plurality of rotation rings 150: 151, 152 may be disposed in the housing 110, and be connected to the shaft 120 at an interval from each other. In particular, at the center of any one rotation ring 152, a gap provider 155 having a step from a rotational surface 154 (or a circular disk plane) of the rotation ring 152 may be provided. The gap provider 155 is also provided with a through hole 159. The through hole 149 of the yoke 140 may correspond to an outer diameter of the gap provider 155. Because the gap provider 155 is a step structure integrated with the rotation ring 150, the interval between the rotation rings 150 may be maintained merely by sequentially fitting the rotation rings 150 on the shaft 120 without providing a separate spacer on the shaft 120.

Although FIG. 4 shows that the yoke 140 is disposed between two rotation rings 150: 151, 152, when the number of rotation rings 150 is increased to three or more, the number of yokes 140 may also be increased.

In this case, the yokes 140 and the rotation rings 150 may be alternately stacked on one other in a vertical direction. The coil 130 may be fixed in the internal space S of the first housing 111, the rotation rings 150 and the yoke 140 may be alternately stacked on one other, the shaft 120 may be inserted and then may be filled with the magnetorheological fluid 10, and the internal space S may be sealed with the second housing 115, thereby completing an assembly process. According to the present invention, a rotation torque may be increased by increasing the numbers or sizes of yokes 140 and rotation rings 150, the magnetorheological fluid rotational load device 100 may be produced through a simple assembly process by alternately stacking the yoke 140 and the rotation rings 150 on one other in the housing 110, and thus flexibility may be given to a change in size for obtaining a torque value suitable for a purpose of use.

A certain gap G may be formed between the yoke 140 and the rotation rings 150, and the gap G may be filled with the magnetorheological fluid 10. Specifically, the gap G may be formed between the first surfaces 143 of the yoke 140 and the outer circumferential surfaces 153 of the rotation rings 150 and between the second surfaces 144 of the yoke 140 and the rotational surfaces 154 of the rotation rings 150. The gap G may also be formed between the housing 110 and the yoke 140 and between the housing 110 and the rotation rings 150. When a property, e.g., a viscosity or a rigidity, of the magnetorheological fluid 10 that fills the gap G is changed, a rotation torque of the rotation rings 150 may also be changed.

A magnitude of a torque T generated between the rotation rings 150 and the yoke 140 due to rotary motion of the rotation rings 150 may be calculated based on a shear stress and a contact area as shown below.

$$T = T_c + T_\eta + T_f,$$

where $T_c$ denotes a controllable torque generated due to a load of an electric or magnetic field, $T_\eta$ denotes a viscous torque generated due to a viscosity of the magnetorheological fluid 10 when no electric or magnetic field is applied, and $T_f$ denotes a frictional torque generated by a mechanical element. At no load, $T_c$ is not generated.

Therefore, the present invention is characterized in that the total torque T of the magnetorheological fluid rotational load device 100 is freely changed by controlling a magnetic field applied by the coil 130 to the magnetorheological fluid 10, that is, by controlling $T_c$.

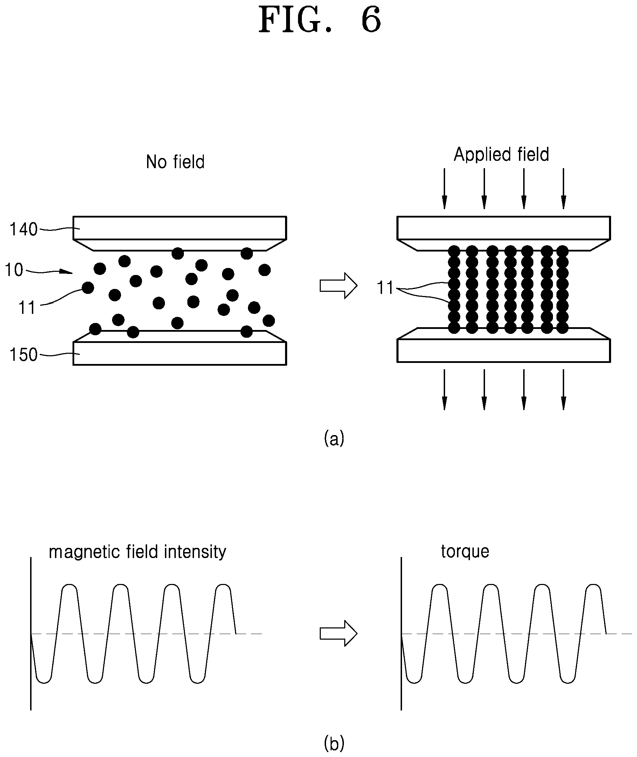

FIG. 6 includes schematic views showing the behavior of the magnetorheological fluid 10 in a space of the gap G, according to an embodiment of the present invention.

The magnetorheological fluid rotational load device 100 may further include a controller (not shown) for controlling an intensity, a frequency, a waveform, or the like of a magnetic field generated by the coil 130. When a user rotates the shaft 120 of the magnetorheological fluid rotational load device 100, the controller may change a torque of the rotation rings 150 by changing the magnetic field applied by the coil 130.

Referring to FIGS. 5 and 6, the magnetorheological fluid 10 may fill the gap G between the yoke 140 and the rotation rings 150 (or the gap G between the housing 110, and the yoke 140 and the rotation rings 150). The magnetorheological fluid 10 includes magnetic particles 11, and a fluidic medium 12, e.g., oil or water, where the magnetic particles 11 are dispersed.

In (a) of FIG. 6, when no magnetic field is applied, the magnetic particles 11 are dispersed in the medium 12. That is, because $T_c = 0$ at no load, the torque has a fixed value of $T = T_\eta + T_f$. On the other hand, when a magnetic field is applied, the magnetic particles 11 may form magnetic chains in a direction of the magnetic field. The chains may be formed from a surface of the rotation ring 150 to reach a surface of the yoke 140. Thus, because $T_c$ is generated, the torque may be increased to $T = T_c + T_\eta + T_f$, and a change in $T_c$ may change the total torque. As such, a torque required to rotate the shaft 120 may be changed based on an intensity of the magnetic field, a binding force of the magnetic chains, a frictional shear force of the yoke 140 and the rotation rings 150, or the like. To better form the magnetic chains, at least the housing 110 may include a magnetic portion, and the yoke 140 and the rotation rings 150 may also include magnetic portions. When an element includes a magnetic portion, it means that the entirety or a part of the element is formed of a magnetic material. The magnetic material may include, for example, iron (Fe), nickel (Ni), cobalt (Co), ferrite ($Fe_3O_4$), or alloys thereof, and nitrided, oxidized, carbonized, or siliconized metals.

A size of the gap G may be 10 times to 100 times, and more specifically, about 20 times, greater than an average diameter of the magnetic particles 11 in the magnetorheological fluid 10. When the gap G is excessively small, the torque value at no load may be increased and interference may be caused during rotation of elements and, when the gap G is excessively large, a device size may not be easily reduced and magnetic chains may not be sufficiently formed in a small magnetic field. For example, the magnetic particles 11 may have a diameter of about 2 $\mu$m to 10 $\mu$m, and have an average diameter of about 5 $\mu$m. In this case, the gap G may have a size of about 0.1 mm, and the magnetic particles 11 may form magnetic chains in the direction of the magnetic field within a range of the above-mentioned value and cause a change in $T_c$ sufficient to transmit a change in tactile sensation to a hand of a user. Strong magnetic chains may be formed and a maximum torque generated by the rotational load device may be increased when the magnetic particles 11 in the magnetorheological fluid 10 are increased, and a content of the magnetic particles 11 in the magnetorheological fluid 10 may be 60 wt% to 95 wt%. When the content of the magnetic particles 11 is less than 60 wt%, a magnitude of the maximum torque may be reduced and thus a sufficient tactile sensation or rigidity may not be transmitted to the user and, when the content of the magnetic particles 11 is greater than 95 wt%, the torque value at no load may be increased due to the excessive magnetic particles 11.

(b) of FIG. 6 shows a change in torque based on an intensity of an applied magnetic field. When the coil 130 applies an alternating magnetic field, a torque of the shaft 120 corresponding thereto may be generated. As such, various patterns and tactile sensations may be provided to a user who rotates the shaft 120 of the magnetorheological fluid rotational load device 100.

Meanwhile, the magnetorheological fluid rotational load device 100 may further include the bearing 190 disposed on the housing 110. The bearing 190 may be connected to a trough 117 on the housing 110, and the body of the shaft 120 may be inserted thereinto to control a rotational friction force of the shaft 120. The body of the shaft 120 may also be inserted into another bearing (not shown) in the internal space S of the housing 110.

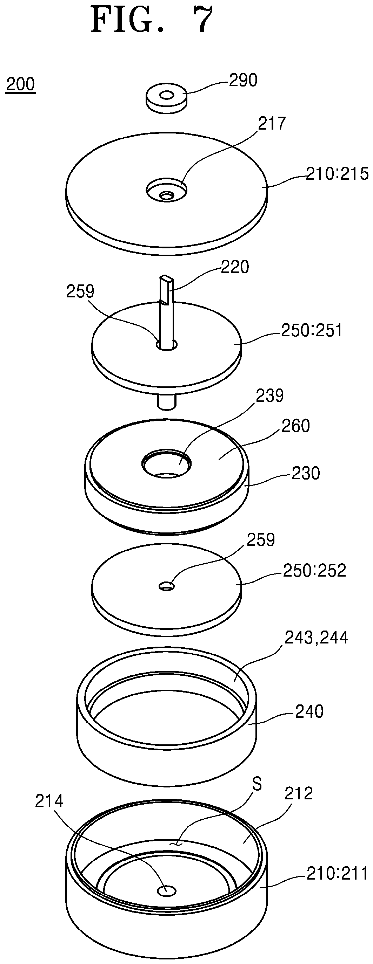

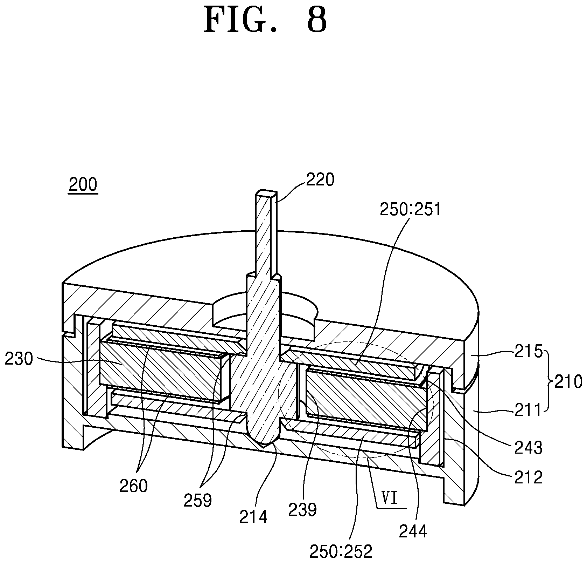

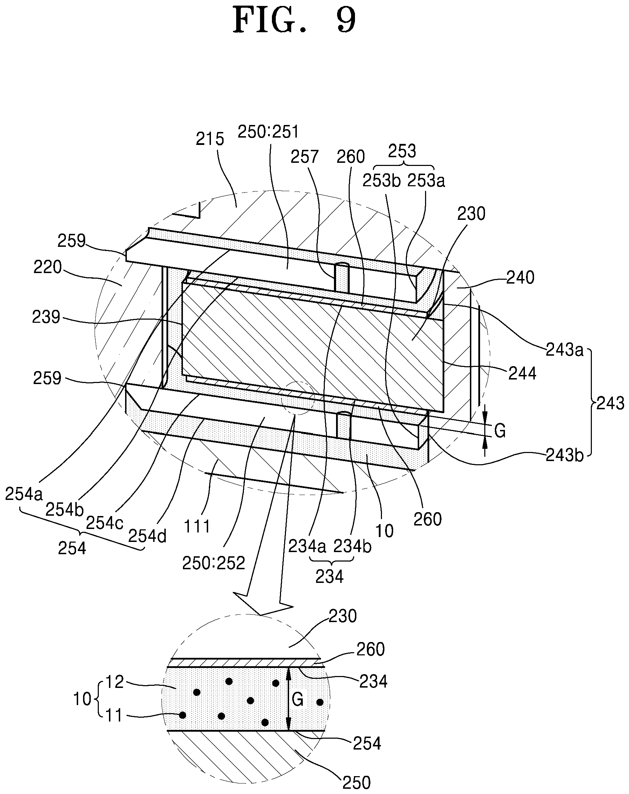

FIG. 7 is a schematic exploded view of a magnetorheological fluid rotational load device 200 according to a second embodiment of the present invention. FIG. 8 is a schematic cross-sectional view of the magnetorheological fluid rotational load device 200 according to the second embodiment of the present invention. FIG. 9 is a magnified view of portion VI of FIG. 8.

The exterior of the magnetorheological fluid rotational load device 200 of the second embodiment may be substantially the same as or similar to that of the magnetorheological fluid rotational load device 100 of the first embodiment as illustrated in FIG. 2. Only elements different from those of the first embodiment will be described and the same elements will not be repeatedly described herein. The same elements in the first and second embodiments are denoted by reference numerals 100s and 200s and correspond to each other.

Referring to FIG. 2 and FIGS. 7 to 9, the magnetorheological fluid rotational load device 200 of the second embodiment may include a housing 210, a shaft 220, a coil 230, a yoke 240, rotation rings 250, and the magnetorheological fluid 10, and further include a bearing 290. The housing 210 and the shaft 220 may be substantially the same as those of the first embodiment except for some differences in shape.

The coil 230 may be disposed in the yoke 240 directly under or directly on the rotation rings 250: 251, 252 connected to the shaft 220 at an interval from each other. A through hole 239 of the coil 230 may have a size only sufficient to form the gap G after the shaft 220 penetrates therethrough, and an outer circumferential surface of the coil 230 may be connected to and fixed and supported by an inner surface 244 of the yoke 240.

The yoke 240 may be fixed in the housing 110. An outer circumferential surface of the yoke 240 may have a shape corresponding to a vertical inner wall 212 of the housing 210, e.g., a ring shape with an opening having a size sufficient to dispose the coil 230 therein, but is not limited thereto. An outer surface of the yoke 240 may face and be fixed to the vertical inner wall 212 of the housing 210.

The yoke 240 may have a shape including at least first surfaces 243 facing the rotation rings 250: 251, 252, and a second surface 244 (see FIG. 9) not facing the rotation rings 250. In other words, an inner surface of the yoke 240 may include at least the first surfaces 243 and the second surface 244. Specifically, the yoke 240 may have a shape including the first surfaces 243: 243a, 243b facing outer circumferential surfaces 253: 253a, 253b (see FIG. 9) of the rotation rings 250: 251, 252, and the second surface 244 not facing the rotation rings 250. The second surface 244 may face and be connected to the outer circumferential surface of the coil 230. From another point of view, the coil 230 may be disposed between the second surface 244 of the yoke 240 and the shaft 220.

The rotation rings 250 may have a circular disk shape overall and be connected to the shaft 220. The rotation rings 250: 251, 252 may be provided with through holes 259 corresponding to an outer diameter of a body of the shaft 220, and thus be fitted on the shaft 220. The rotation rings 250 may rotate in association with rotation of the shaft 220 relative to the coil 230 fixed to the second surface 244.

A plurality of rotation rings 250: 251, 252 may be disposed in the housing 210, and be connected to the shaft 220 at an interval from each other. The coil 230 may be disposed between the rotation rings 250: 251, 252, and rotational surfaces 254 of the rotation rings 250 may face top and lower surfaces 234: 234a, 234b of the coil 230. A plurality of coils 230 may be provided and each coil 230 may be disposed between the rotation rings 250.

A certain gap G may be formed between the yoke 240 and the rotation rings 250 and between the coil 230 and the rotation rings 250, and the magnetorheological fluid 10 may fill the gap G. Specifically, the gap G may be formed between the first surfaces 243 of the yoke 240 and the outer circumferential surfaces 253 of the rotation rings 250 and between the top and lower surfaces 234 of the coil 230 and the rotational surfaces 254 of the rotation rings 250. The gap G may also be formed between the housing 210 and the rotation rings 250 and between the coil 230 and the shaft 220. When a property, e.g., a viscosity or a rigidity, of the magnetorheological fluid 10 that fills the gap G is changed, a rotation torque of the rotation rings 250 may also be changed.

Meanwhile, protectors 260 may be connected onto the surfaces 234 of the coil 230 facing the rotational surfaces 254 of the rotation rings 250. When the coil 230 is in direct contact with the magnetorheological fluid 10, the magnetorheological fluid 10 may penetrate into a space between turns of the coil 230. As such, the protectors 260 having a flat panel shape may be disposed on the surfaces 234 of the coil 230, which may be in contact with the magnetorheological fluid 10, to cover the space between turns of the coil 230.

According to the present invention, because the coil 230 and the rotation rings 250 are closest to each other and face each other over a large area, a magnetic field generated by the coil 230 may be directly applied to the magnetorheological fluid 10 that fills the gap G between the coil 230 and the rotation rings 250. Many and strong magnetic chains may be formed due to a strong magnetic field applied over a large area, and thus a rotation torque may be remarkably increased.

Compared to the first embodiment, according to the magnetorheological fluid rotational load device 200 of the second embodiment, because the coil 230 is not located outside outer circumferences of the rotation rings 250 and is disposed on or under the rotation rings 250, a diameter of the whole device 200 may be reduced based on the disposition of the coil 230. According to the first embodiment, the coil 130 is disposed outside outer circumferences of the yoke 140 and the rotation rings 150 and thus a diameter of the whole device 100 may be relatively large.

In addition, according to the magnetorheological fluid rotational load device 200 of the second embodiment, because the coil 230 and the rotation rings 250 are closest to each other, a rotation torque may be remarkably increased by applying a strong magnetic field. As such, the device 200 may be applied to a target device requiring a high torque, and also be applied to a brake system.

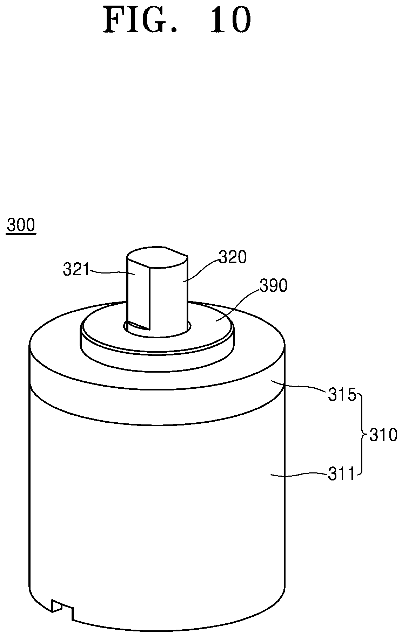

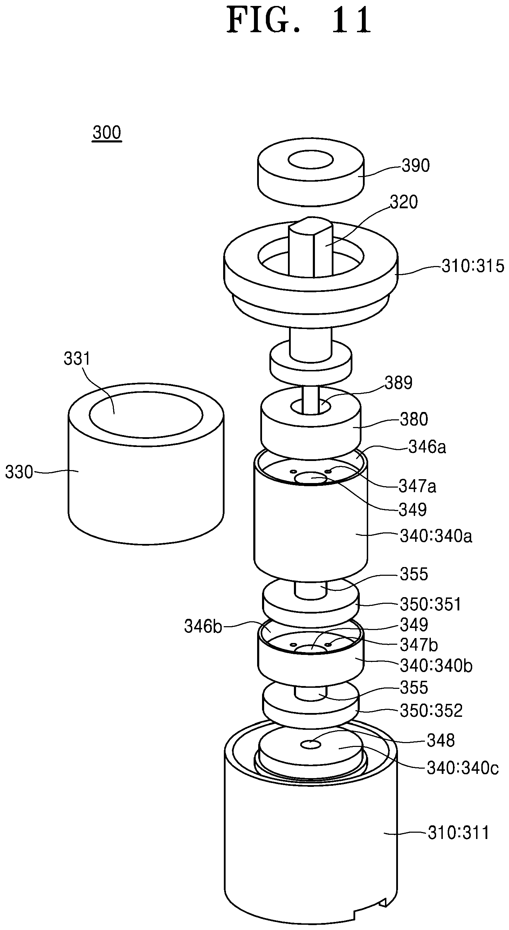

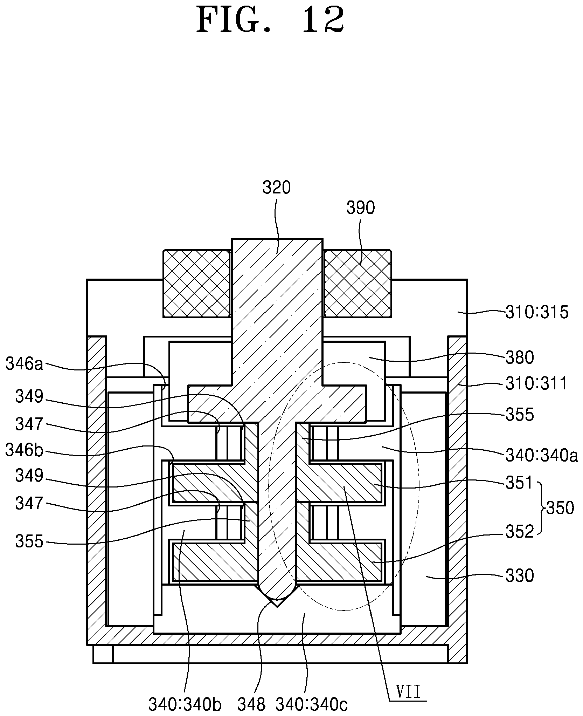

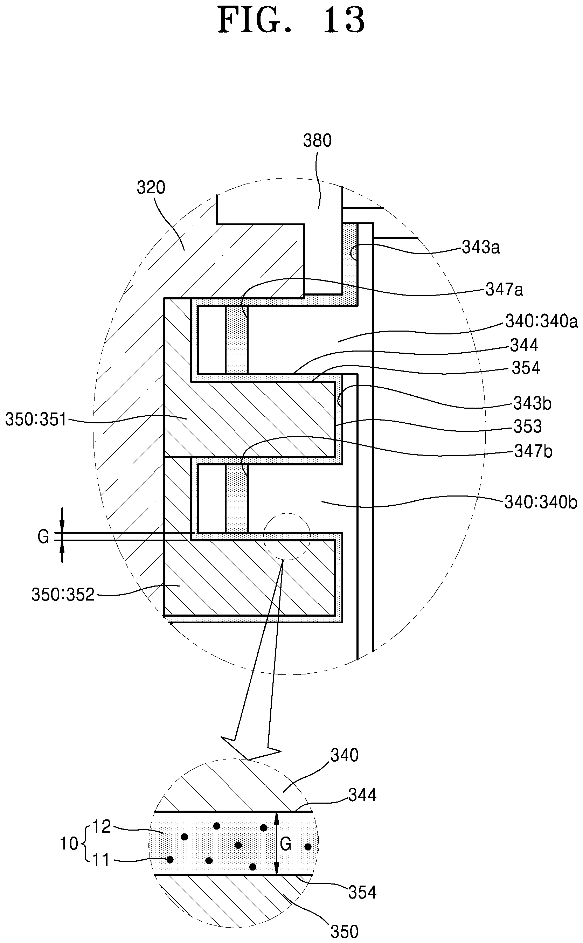

FIG. 10 is a schematic perspective view of a magnetorheological fluid rotational load device 300 according to a third embodiment of the present invention. FIG. 11 is a schematic exploded view of the magnetorheological fluid rotational load device 300 according to the third embodiment of the present invention. FIG. 12 is a schematic cross-sectional view of the magnetorheological fluid rotational load device 300 according to the third embodiment of the present invention. FIG. 13 is a magnified view of portion VII of FIG. 12. Only elements different from those of the first embodiment will be described and the same elements will not be repeatedly described herein. The same elements in the first and third embodiments are denoted by reference numerals 100s and 300s and correspond to each other.

Referring to FIGS. 10 to 13, the magnetorheological fluid rotational load device 300 may include a housing 310, a shaft 320, a coil 330, yokes 340, and rotation rings 350, and further include a shield cover 380 and a bearing 390. The housing 310, the shaft 320, and the coil 330 may be substantially the same as those of the first embodiment except for some differences in shape.

The coil 330 may be disposed in the housing 310. To uniformly apply a magnetic field in the housing 310, the coil 330 may have a shape corresponding to a vertical inner wall of the housing 310, e.g., a ring shape with an opening, but is not limited thereto. Due to a vertical magnetic field formed by the coil 330, the particles 11 of the magnetorheological fluid 10 may form chains along a vertical direction (or a shaft body direction) to control a rotation torque.

The yoke 340: 340a, 340b, 340c may be fixed in the housing 310. An outer surface of the yoke 340 may face and be fixed to an inner surface 331 of the opening of the coil 330.

The yoke 340 may have a shape including at least first surfaces 343: 343a, 343b and second surfaces 344 (see FIG. 13) facing the rotation rings 350: 351, 352. In other words, an inner surface of the yoke 340 may include at least the first surfaces 343 and the second surfaces 344.

The yoke 340: 340a, 340b, 340c may be fixed in the housing 310, and include at least one yoke ring 340b. The yoke ring 340b may alternate with the rotation rings 350: 351, 352, and form a certain gap G from the rotation rings 350: 351, 352 to allow the magnetorheological fluid 10 to fill the gap G. Although one yoke ring 340b is disposed between two rotation rings 350: 351, 352 in this specification, the numbers of rotation rings 350 and yoke rings 340b may be increased.

The yoke 340 may include an upper yoke 340a at an upper side, and a lower yoke 340c at a lower side, and at least one yoke ring 340b may be disposed in an internal space formed by the upper and lower yokes 340a and 340c.

The upper yoke 340a may serve as an upper wall and a side wall of the yoke 340. Like the housing 310, the upper yoke 340a may also have an almost cylindrical shape to provide a space where the shaft 320 and the rotation rings 350 may rotate. The upper yoke 340a may have an inner diameter greater than outer diameters of the rotation rings 350 and the yoke ring 340b. A through hole 349 through which the shaft 320 and a gap provider 355 penetrate may be provided at the center of an upper surface of the upper yoke 340a. A plurality of fluid passage holes 347a may also be provided in the upper surface of the upper yoke 340a.

At least one rotation ring 350: 351, 352 and at least one yoke ring 340b may be disposed in an internal space of the upper yoke 340a. The yoke ring 340b may be fixed in the internal space of the upper yoke 340a, and the rotation rings 350 may be disposed on and/or under the yoke ring 340b to rotate in association with rotation of the shaft 320.

The yoke ring 340b may be disposed on and/or under the rotation rings 350. The yoke ring 340b may have a circular disk shape overall to face the rotation rings 350 on planar portions 344 and 354. A through hole 349 through which the shaft 320 and the gap provider 355 penetrate may be provided at the center of the yoke ring 340b.

Meanwhile, to allow the planar portions 344 and 354 of the yoke ring 340b and the rotation rings 350 to face each other, to reduce an overall height, and to increase an area of surfaces facing each other, the rotation ring 350: 351 may be seated in a space formed by a stepped wall 346b provided on an upper surface of the yoke ring 340b.

The lower yoke 340c may be mounted under the upper yoke 340a to seal an open lower surface of the upper yoke 340a. At the same time, a planar portion on the lower yoke 340c may face a lower plane of the rotation ring 350: 352. A shaft trough 348 may be formed on the lower yoke 340c to accommodate a part of a lower portion of the shaft 320. As such, a body of the shaft 320 may not be dislocated from the shaft trough 348 during rotation of the shaft 320.

The internal space may be sealed by the upper and lower yokes 340a and 340c, and the rotation rings 350 and the yoke ring 340b may alternate with each other along a vertical direction in the internal space. The vertical direction corresponds to a direction of the body of the shaft 320, and a horizontal direction corresponds to a planar direction of the rotation rings 350. As such, an upper inner surface of the upper yoke 340a, upper and lower surfaces of the yoke ring 340b, and an upper surface of the lower yoke 340c may have a certain gap G from upper and lower surfaces of the rotation rings 350 (see FIG. 13).

Meanwhile, the shield cover 380 may be seated in a space formed by a stepped wall 346a provided on the upper surface of the upper yoke 340a. The shield cover 380 may seal the upper surface of the upper yoke 340a to prevent the magnetorheological fluid 10 from leaking out of the yoke 340. A hole 389 through which the body of the shaft 320 passes may be provided at the center of the shield cover 380.

A general mechanical jog dial, which provides only a single tactile sensation, may not provide various patterns based on various user modes, and have a problem of abrasion due to mechanical operation. Although a jog of a vibration motor type may be used in addition to the mechanical jog dial, the jog of the vibration motor type does not transmit direct tactile sensations but transmits indirect tactile sensations through a vibration motor disposed thereunder, and thus has lower tactile transmission power compared to direct tactile transmission.

On the other hand, according to the present invention, a user may feel various tactile sensations corresponding to various torque patterns formed based on an input signal of a magnetic field applied by the coil 130, 230, or 330, a problem of abrasion may be solved by changing a shear force based on a change in state of the magnetorheological fluid 10, and direct tactile transmission may be enabled through the shaft 120, 220, or 320.

In addition, according to the present invention, characteristics may be controlled suitably for the purposes of various applications based on a property of the magnetorheological fluid 10. For example, when heavy tactile sensations are required, a high-viscosity magnetorheological fluid may be used.

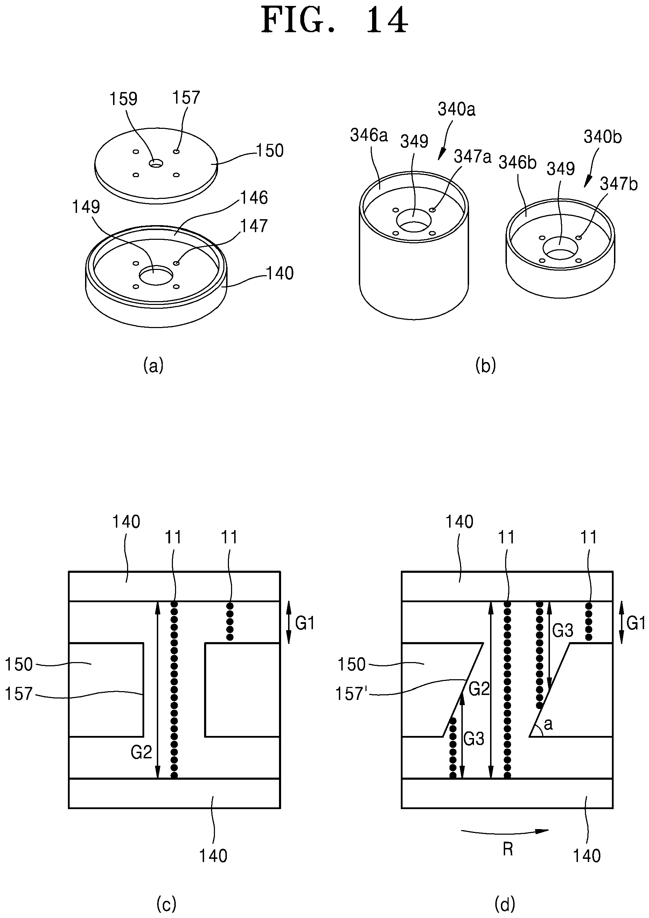

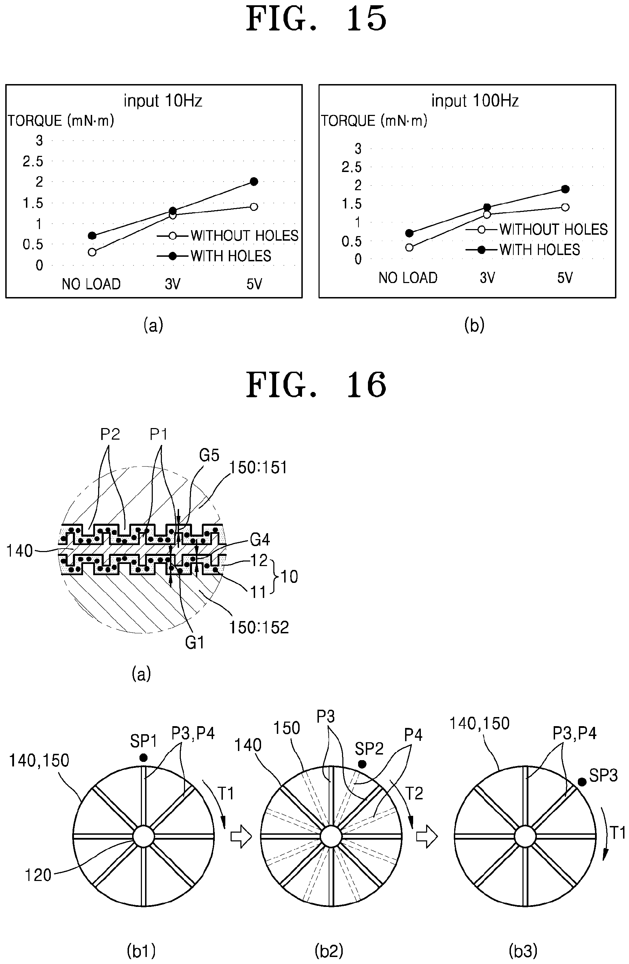

FIG. 14 includes schematic views ((a) and (b)) showing the yokes 140, 340a, and 340b and the rotation ring 150 having fluid passage holes 147, 157, and 347, and schematic views ((c) and (d)) showing shapes of magnetic chains in fluid passage holes 157 and 157', according to an embodiment of the present invention. FIG. 15 includes graphs showing torque values before and after fluid passage holes are formed, according to a test example.

Referring to (a) and (b) of FIG. 14, a plurality of fluid passage holes 147 and 347: 347a, 347b may be provided in the yoke 140, the upper yoke 340a, the yoke ring 340b, etc. A plurality of fluid passage holes 157 may also be provided in the rotation ring 150. The fluid passage holes 147, 157, and 347 may vertically penetrate through horizontal surfaces such as the surfaces 144 and 344 of the yokes 140 and 340 and the rotational surfaces 154 of the rotation ring 150. Without being limited thereto, fluid passage holes may horizontally penetrate through vertical surfaces such as the vertical wall 146 and the stepped walls 346a and 346b.

Referring to (c) of FIG. 14, the fluid passage holes 157 may increase a length by which the magnetic particles 11 of the magnetorheological fluid 10 may form vertical chains (G1 → G2). That is, the length of the chains of the magnetic particles 11 may be increased from a thickness of a gap G, G1 to a thickness of the fluid passage holes 157, i.e., a gap G2. As such, a change in $T_c$ may be increased and a total torque may also be increased on application of the same load. According to an embodiment, when the yokes 140 and 340 and the rotation ring 150 has a diameter of about 10 mm, the fluid passage holes 147, 157, and 347 may have a diameter of about 0.3 mm.

Referring to (d) of FIG. 14, the fluid passage holes 157' may be inclined at an angle a without being vertically provided (a=90°). By providing the inclined fluid passage holes 157', chains of the magnetic particles 11 may be increased along increased surface areas of the fluid passage holes 157'. That is, in addition to the increase in the length of the chains of the magnetic particles 11 from the thickness of the gap G, G1 to the thickness of the fluid passage holes 157, i.e., the gap G2, the chains of the magnetic particles 11 may be further formed in a gap G3 from the inclined surfaces of the fluid passage holes 157' to the rotational surfaces 154 of the rotation ring 150 or the surfaces 144 of the yoke 140. In particular, the fluid passage holes 157' may be inclined along a rotation direction R of the rotation ring 150.

The inclined angle a may be set considering a diameter or the number of fluid passage holes 157', a strength of a rotation torque, or the like, for example, 30° to 80°. When the angle a is less than 30°, the fluid passage holes 157' may penetrate through the horizontal surfaces with an excessively large size and thus not easily serve as fluid passage holes and, when the angle a is greater than 80°, the fluid passage holes 157' may not exhibit any difference from the vertical fluid passage holes 157.

Referring to (a) and (b) of FIG. 15, when a load is applied at 10 Hz and 100 Hz, a higher torque is exhibited with the fluid passage holes 147, 157, and 347. Even at no load for applying no magnetic field, a higher torque is exhibited with the fluid passage holes 147, 157, and 347. This may be regarded as a result of an increase in a frictional torque $T_f$ due to the magnetorheological fluid 10 flowing into the fluid passage holes 147, 157, and 347.

FIG. 16 includes schematic views showing pattern shapes on horizontal surfaces of the yoke 140 and the rotation rings 150, according to an embodiment of the present invention. (a) of FIG. 16 is a schematic side cross-sectional view and (b) of FIG. 16 includes schematic plan views of the yoke 140 and the rotation rings 150.

Referring to (a) of FIG. 16, protrusion patterns P1 may be provided on the surfaces 144 of the yoke 140, or protrusion patterns P2 may be provided on the rotational surfaces 154 of the rotation rings 150. The protrusion patterns P1 and P2 may increase a surface area between the yoke 140 and the rotation rings 150 to form more magnetic chains. As such, a rotation torque may be increased in the same-sized magnetorheological fluid rotational load device 100. In addition to the protrusion patterns P1 and P2, a surface roughness of the surfaces 144 of the yoke 140 and the rotational surfaces 154 of the rotation rings 150 may be increased to increase a surface area and form more magnetic chains.

The protrusion patterns P1 and P2 may be provided on one or both of the yoke 140 and the rotation rings 150. The protrusion patterns P1 and P2 may face each other or alternate with each other.

Referring to (b) of FIG. 16, protrusion patterns P3 and P4 may be provided in regions on the surfaces 144 and 154 of the yoke 140 and the rotation rings 150. Regions, intervals, angles, etc. of the protrusion patterns P3 and P4 may be freely changed.

For example, the protrusion patterns P3 and P4 may be provided on the yoke 140 and the rotation rings 150 to face each other, and a total of eight patterns may be provided every 45° in a radial direction on each surface. In (b1) of FIG. 16, a user may rotate the shaft 120 clockwise from a point SP1. In this case, because the protrusion patterns P3 and P4 face each other and magnetic chains are formed within a short gap (corresponding to a distance between the protrusion patterns), a relatively high torque T1 may act. Subsequently, when the user rotates the shaft 120 from a point SP2 as shown in (b2) of FIG. 16, because magnetic chains are formed within a long gap (corresponding to a surface distance between the yoke and the rotation rings) in regions where the protrusion patterns P3 and P4 do not face each other, a relatively low torque T2 may act. Because the torque reduced from T1 to T2 acts, the user may be provided with a rotation-loosened tactile sensation. Thereafter, when the rotation reaches a point SP3 as shown in (b3) of FIG. 16, because the protrusion patterns P3 and P4 face each other again and magnetic chains are formed within the short gap (corresponding to the distance between the protrusion patterns), the relatively high torque T1 may act. Because the torque increased from T2 to T1 acts, the user may be provided with a rotation-tightened tactile sensation. As described above, while rotating the shaft 120, the user may be provided with a tactile sensation changed according to the torque changed based on the regions.

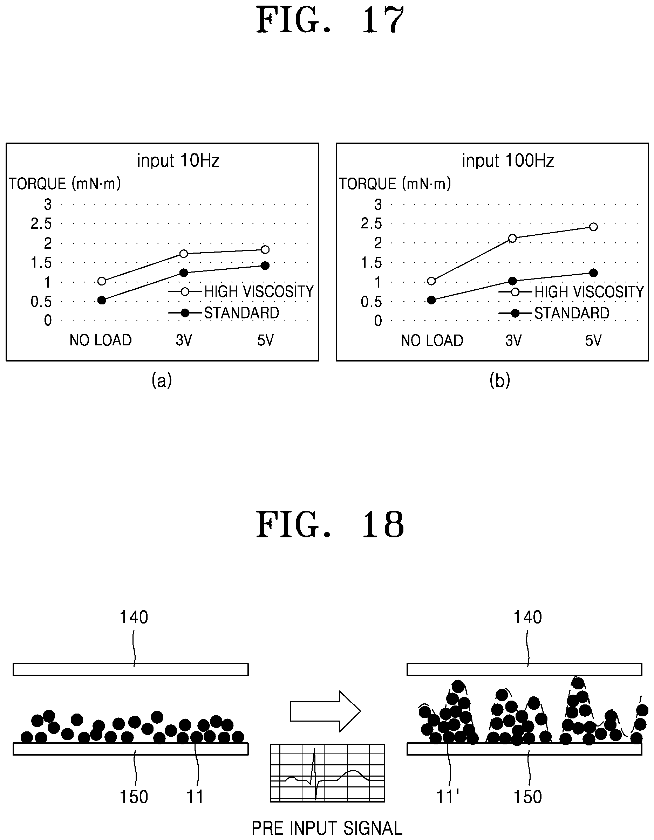

FIG. 17 includes graphs showing a torque value based on a viscosity of a magnetorheological fluid, according to a test example of the present invention. For example, a standard viscosity was set to be about 0.15 Pa·s, a high viscosity was set to be about 0.4 Pa·s, and a density was set to be about 2.8 g/ml and 3.8 g/ml.

Referring to (a) and (b) of FIG. 17, when a load is applied at 10 Hz and 100 Hz, a higher torque is exhibited by the high-viscosity magnetorheological fluid 10. As such, a torque value, which is not easily implementable with the standard viscosity even when the load voltage is increased above 10V, may be implemented using the high-viscosity magnetorheological fluid 10. For example, at 5V, a torque higher than 1.5 mN·m may not be easily implemented with the standard viscosity, but a torque higher than 2 mN·m may be implemented with the high viscosity. In particular, for vehicles, a torque value implemented when a load of 12V is used may be increased as high as possible to prevent rotation of the rotational load device in certain situations (e.g., in an emergency or while driving). By setting the viscosity of the magnetorheological fluid 10 to increase the maximum torque of the magnetorheological fluid rotational load device 100 as described above, a safety lock function for preventing rotation by the user may be applied. As long as the rotation by the user is prevented at the maximum torque value, in addition to control of the viscosity, the safety lock function may be implemented through structural modification, for example, by increasing the numbers of rotation rings and yokes, increasing an area (an area of facing surfaces or a surface area), or reducing the gap G. Alternatively, the safety lock function may also be implemented by applying a higher current to the coil.

The safety lock function may not only ensure safety in vehicles by preventing dangerous manipulation while driving (e.g., shifting jog dial gears while driving), but also prevent unexpected manipulation by children during operation of home appliances such as washing machines.

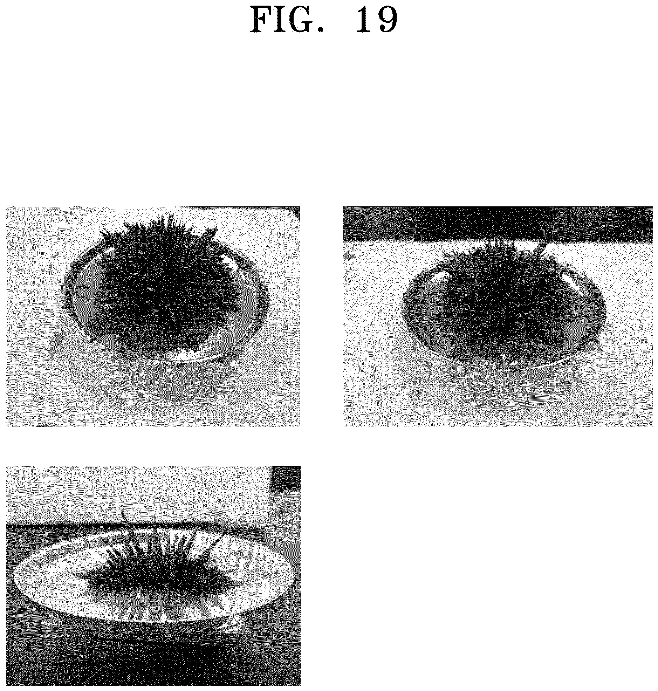

FIG. 18 is a schematic view showing that the magnetic particles 11 settled in the magnetorheological fluid 10 are redistributed due to application of a pre-input signal, according to an embodiment of the present invention. FIG. 19 includes photographic images showing that the magnetorheological fluid 10 has a spike shape when the pre-input signal is applied, according to an embodiment of the present invention.

When the magnetorheological fluid 10 is used, settling of the magnetic particles 11 in the fluid 10 may be a problem. Because the magnetic particles 11 are settled down as time passes, when the magnetic particles 11 are not uniformly dispersed in the housing 110, magnetic chains may not be appropriately formed. Alternatively, when the magnetorheological fluid rotational load device 100 is repeatedly used, the magnetic particles 11 may be concentrated in a specific portion of the gap G between the yoke 140 and the rotation ring 150. For example, in the device 100 of the first embodiment, many chains may be formed at edges of the yoke 140 and the rotation ring 150 because the solenoid coil 130 is close, and less chains may be formed toward the body of the shaft 120 due to a weak magnetic field because the solenoid coil 130 is far. As described above, the magnetic particles 11 may be concentrated in a specific region of the gap G due to settling of the magnetic particles 11, or be settled and concentrated in a lower region of the housing 110. When the magnetorheological fluid rotational load device 100 is operated in this state, a torque of a magnitude different from a preset magnitude may be generated.

Therefore, the present invention is characterized in that, to appropriately redistribute the magnetic particles 11 settled in the magnetorheological fluid rotational load device 100, a controller (not shown) transmits a spike-, pulse-, or sine wave-type pre-input signal to the coil 130 before operation of the magnetorheological fluid rotational load device 100. When the magnetorheological fluid rotational load device 100 is not operated for a set time or longer, the controller may transmit the pre-input signal to the coil 130 before operation.

The pre-input signal is different from the input signal for forming magnetic chains described above in relation to FIG. 6. As a signal input to move the magnetic particles 11 in the magnetorheological fluid 10 to form an incomplete or complete chain shape in the gap G in at least one of vertical and horizontal directions, the pre-input signal does not need to have a specific frequency or waveform and may be a signal for applying one or more strong magnetic fields. In addition, the pre-input signal does not need to be a signal for forming complete magnetic chains with the magnetic particles 11 from a lower surface of the gap G (e.g., an upper surface of the rotation ring 150) to an upper surface of the gap G (e.g., a lower surface of the yoke 140). FIG. 19 shows various spike shapes of incomplete chains formed by the magnetic particles 11.

When a magnetic field is applied by the coil 130 based on the pre-input signal, the particles 11 settled in the magnetorheological fluid 10 form an incomplete chain shape such as a spike shape in a direction of the magnetic field and, at the same time or immediately thereafter, the magnetic field may be released or only a weak magnetic field may be applied. As such, the spike shape or the like may be released and the magnetic particles 11 in the incomplete chain shape such as the spike shape may spread to be redistributed in the gap G.

Meanwhile, when an operating voltage $V_1$ of the magnetorheological fluid rotational load device 100 is to be applied, upon determining that a height of the lowest-height magnetic chains formed in the gap G between the yoke 140 and the rotation ring 150 is less than a height of the gap G, the controller may apply a pre-input signal voltage $V_2$ higher than $V_1$ to solve the above problem.

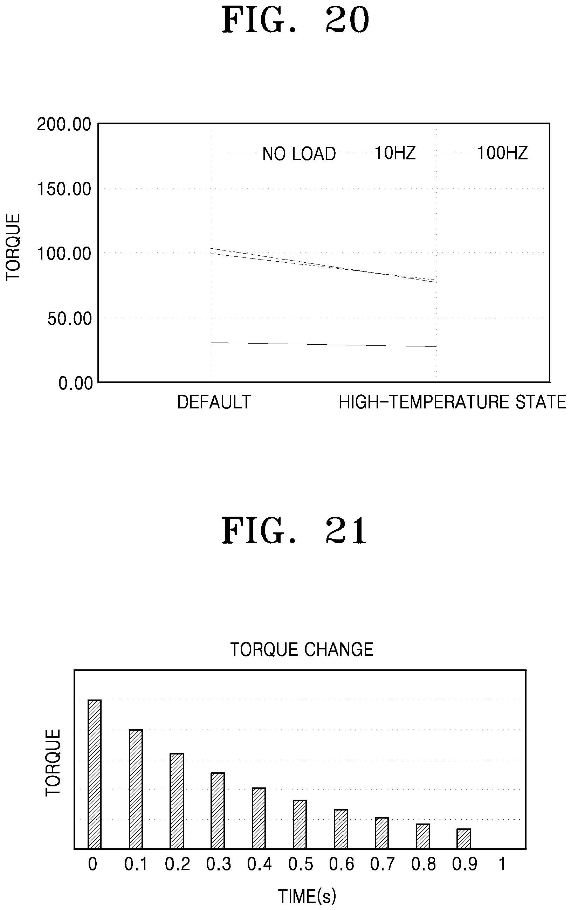

FIG. 20 is a graph showing a torque value based on a temperature of a magnetorheological fluid, according to a test example of the present invention.

Referring to FIG. 20, it is shown that a torque is gradually reduced from a default state to a high-temperature state (or an operating state of the rotational load device) based on a change in property such as a viscosity or a shear stress of the magnetorheological fluid at 5V. Therefore, the controller may detect an operating temperature of the magnetorheological fluid rotational load device and, when the temperature is increased from a default operating temperature, maintain the torque strength at the default operating temperature by controlling an intensity or a pattern of a magnetic field to offset a decrement in torque due to the increase in temperature. As such, uniformity in torque value may be ensured regardless of an external temperature environment, e.g., summer or winter.

FIG. 21 is a graph showing a torque value when a magnetorheological fluid rotational load device is applied to an anti-lock braking system (ABS), according to an embodiment of the present invention.

As described above, the magnetorheological fluid rotational load device of the present invention may increase a torque by stacking pluralities of yokes 140 and rotation rings 150 on one another or increasing a surface area, or by disposing the coil 230 closest to the rotation rings 250 as in the second embodiment. As such, the magnetorheological fluid rotational load device may be applied to a target device requiring a high torque. The target device may be a transportation means such as a vehicle, and the magnetorheological fluid rotational load device may be a brake system.

In particular, unlike a general mechanical brake system which employs a complicated structure and a plurality of components to instantaneously change a torque to various values, according to the present invention, various torque values may be implemented by merely changing an intensity or a pattern of a magnetic field applied by a coil. As such, the magnetorheological fluid rotational load device of the present invention may be applied to the ABS system to implement changes in torque as shown in FIG. 21.

When wheels of a vehicle instantaneously lock during sudden braking, the vehicle may lose control and slip on the ground due to the inertial force (or a driving speed). The maximum static friction force is generated at the moment when the vehicle starts to slip, and a kinetic friction force which is a relatively low friction force may act after the vehicle starts to slip. The ABS system may repeatedly cause a moment when a static friction force is changed to a kinetic friction force by repeatedly causing the short moment when the maximum static friction force acts, thereby maximizing a friction force.

A general ABS system further requires an ABS modulator including a pump and an accumulator to apply or release a hydraulic pressure to or from a brake, and may not easily speed up a pattern in which a static friction force acts. On the other hand, the magnetorheological fluid rotational load device of the present invention may implement an ABS system by using a simple configuration for controlling an intensity and a cycle of a magnetic field.

According to an embodiment, not to lose steering control of a vehicle due to a wheel lock during sudden braking, a wheel slip ratio may be maintained at about 20%. The slip ratio (%) may be calculated as {V (vehicle speed)-V (wheel speed)}/V (wheel speed).

A brake system to which the present invention is applied may solve a durability problem caused by repeated hydraulic brake control, enable accurate brake control, and prevent frequent failure of an ABS modulator.

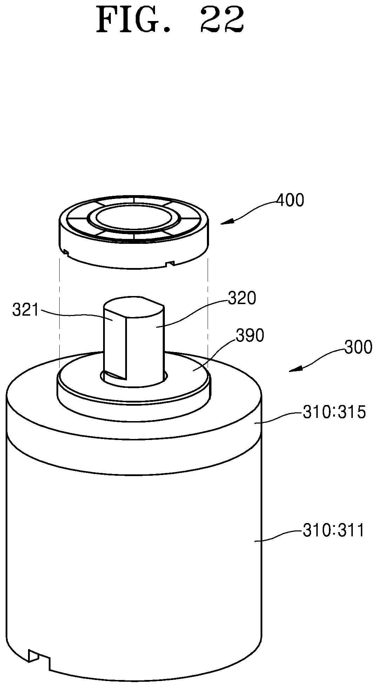

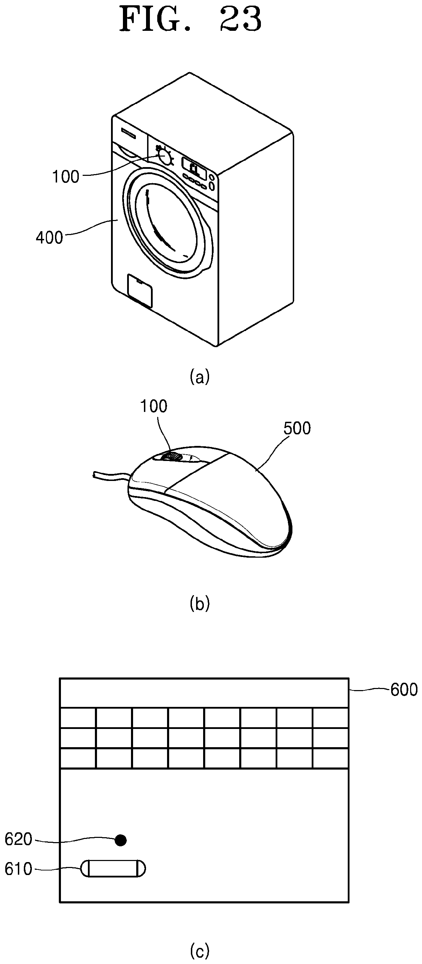

FIG. 22 is a schematic view of a magnetorheological fluid rotational load module according to an embodiment of the present invention. FIG. 23 includes schematic views showing applications of a magnetorheological fluid rotational load device, according to various embodiments of the present invention.

The magnetorheological fluid rotational load device 300 may be combined with various units to serve as a rotational load module. According to an embodiment, the magnetorheological fluid rotational load module may have a form in which the magnetorheological fluid rotational load device 300 is combined with an encoder sensor 400. Although a rotational friction force is generally reduced by coupling the bearing 390 to the shaft 320, the encoder sensor 400 in which the bearing 390 is combined with an encoder for sensing data about a speed, a location, and a direction of rotation may be coupled to the magnetorheological fluid rotational load device 300.

The magnetorheological fluid rotational load device or rotational load module may be applied to all devices equipped with a dial or a wheel.

For example, when applied to a vehicle, a tactile sensation of a weak vibration or torque may be provided when a jog dial (or the rotational load device) is set to a normal driving mode, and a tactile sensation of a strong vibration or torque may be provided when the jog dial is set to a sport driving mode. As another example, when the jog dial is rotated to shift gears in the vehicle, a vibration or torque may be provided with a different strength based on park (P), drive (D), neutral (N), or reverse (R). As such, a user may easily change driving modes or gears merely based on tactile sensations while looking ahead without viewing the jog dial.

As another example, as shown in (a) of FIG. 23, the magnetorheological fluid rotational load device 100 may be applied to a user interface (UI) of a washing machine 400 or a microwave oven, a dial (or the shaft 120) may be placed at a location corresponding to various driving modes, and various tactile sensations may be provided based on the driving modes. For example, a soft rotational tactile sensation may be provided when the washing machine 400 is set to a normal wash mode, and a rotational tactile sensation may be provided with a high torque when the washing machine 400 is set to a power wash mode.

As shown in (b) of FIG. 23, the magnetorheological fluid rotational load device 100 may be applied to a wheel of a mouse 500 to provide various haptic sensations by changing a torque of wheel manipulation based on an environment of use. For example, when an emergency occurs during a game, a torque for driving the wheel may be increased. As shown in (c) of FIG. 23, when a user plays a block breaker game 600 to horizontally move a reflector 610 by vertically manipulating the mouse wheel and when the wheel is driven upward and the reflector 610 moves to the left edge and has no more space to move, a torque of the mouse wheel driven upward may be increased to disable further manipulation and only downward driving of the mouse wheel may be allowed. In addition, a rigidity of the wheel may be instantaneously changed at a moment when a ball 620 is reflected on the reflector 610 and thus the reflection of the ball 620 may be immediately provided with a tactile sensation to the user.

As described above, according to the present invention, various patterns may be made based on various input signals during rotation of a rotational load device and thus various and delicate tactile sensations may be provided to a user. Furthermore, according to the present invention, a rotation torque may be changed, a production cost may be reduced, a device size may be easily reduced, and various applications for different purposes may be enabled using a shear property or a viscosity of a magnetorheological fluid.

While the present invention has been particularly shown and described with reference to embodiments thereof, it will be understood by one of ordinary skill in the art that various changes in form and details may be made therein without departing from the scope of the present invention as defined by the following claims.

## Claims

1. A magnetorheological fluid rotational load device comprising:

   a housing;
   a yoke fixed in the housing;
   a shaft rotatably mounted in the housing;
   one or more rotation rings connected to the shaft to rotate in association with rotation of the shaft;
   a coil disposed in the housing;
   a magnetorheological fluid filling at least part of the housing,
   wherein at least a part of the housing is made of a magnetic material.

2. The magnetorheological fluid rotational load device of claim 1, wherein a content of magnetic particles in the magnetorheological fluid is 60 wt% to 95 wt%.

3. The magnetorheological fluid rotational load device of claim 1, wherein, when a content of magnetic particles in the magnetorheological fluid is increased, a rotation torque acting between the yoke and the rotation rings is increased.

4. The magnetorheological fluid rotational load device of claim 1, wherein a size of a certain gap between at least the yoke and the rotation rings, which is filled with the magnetorheological fluid, is 10 times to 100 times greater than an average diameter of magnetic particles in the magnetorheological fluid.

5. The magnetorheological fluid rotational load device of claim 1, wherein, when a viscosity of the magnetorheological fluid is increased, a rotation torque acting between the yoke and the rotation rings is increased.

6. The magnetorheological fluid rotational load device of claim 1, wherein at least one of a viscosity of the magnetorheological fluid, numbers of yokes and rotation rings, areas of the yoke and the rotation rings, a size of a gap between the yoke and the rotation rings, and an intensity of a current applied to the coil is set to prevent rotation by a user in a specific situation by increasing a maximum value of a rotation torque acting between the yoke and the rotation rings.

7. The magnetorheological fluid rotational load device of claim 1, further comprising a controller for controlling a magnetic field applied by the coil to the magnetorheological fluid.

8. The magnetorheological fluid rotational load device of claim 7, wherein the controller transmits a pre-input signal to the coil before operation of the magnetorheological fluid rotational load device, and wherein the pre-input signal is a signal for controlling settled particles of the magnetorheological fluid to form an incomplete or complete chain shape in a certain gap in at least one of vertical and horizontal directions and then to be redistributed.

9. The magnetorheological fluid rotational load device of claim 8, wherein the incomplete chain shape comprises a spike shape.

10. The magnetorheological fluid rotational load device of claim 7, wherein, when an operating voltage V1 is to be applied to the coil, upon determining that a height of chains formed by particles of the magnetorheological fluid in a certain gap between the yoke and the rotation rings is less than a height of the gap, the controller applies a voltage V2 higher than V1.

11. The magnetorheological fluid rotational load device of claim 7, wherein, when a temperature is increased compared to a default operating temperature of the magnetorheological fluid rotational load device, the controller maintains a torque strength of the default operating temperature by controlling an intensity or a pattern of the magnetic field.

12. The magnetorheological fluid rotational load device of claim 1, wherein the one or more rotation rings are connected to the shaft at an interval from each other, and the yoke has a shape comprising first surfaces facing outer circumferential surfaces of the rotation rings, and second surfaces facing rotational surfaces of the rotation rings and being perpendicular to the first surfaces.

13. The magnetorheological fluid rotational load device of claim 12, wherein the yoke is disposed at an outer side of the rotation rings, and the coil is disposed between the yoke and a vertical inner side of the housing.

14. The magnetorheological fluid rotational load device of claim 1, wherein the one or more rotation rings are connected to the shaft at an interval from each other, and the yoke has a shape comprising first surfaces facing outer circumferential surfaces of the rotation rings, and a second surface not facing the outer circumferential surfaces of the rotation rings.

15. The magnetorheological fluid rotational load device of claim 14, wherein the yoke is disposed at a vertical inner side of the housing,

wherein the coil is disposed between the second surface of the yoke and the shaft, and wherein protectors are connected onto surfaces of the coil facing rotational surfaces of the rotation rings.

16. The magnetorheological fluid rotational load device of claim 1, wherein the yoke comprises at least one yoke ring,

wherein the yoke ring and the rotation rings alternate with each other along a vertical direction to form a certain gap between, and wherein the yoke is disposed at an outer side of the rotation rings, and the coil is disposed between the yoke and a vertical inner side of the housing.

**17.** The magnetorheological fluid rotational load device of claim 1, wherein, when the coil applies a magnetic field to the magnetorheological fluid, particles of the magnetorheological fluid form chains in a vertical direction to increase a rotation torque acting between the yoke and the rotation rings.

**18.** The magnetorheological fluid rotational load device of claim 1, wherein fluid passage holes are formed in at least one of rotational surfaces of the rotation rings and surfaces of the yoke facing the rotational surfaces of the rotation rings, and
wherein the magnetorheological fluid is disposed in the fluid passage holes and a certain gap between the yoke and the rotation rings and increases a rotation torque acting between the yoke and the rotation rings by forming chains in the gap and the fluid passage holes in a vertical direction when a magnetic field is applied.

**19.** The magnetorheological fluid rotational load device of claim 18, wherein the fluid passage holes are formed at an angle of 30° to 80° in the rotational surfaces of the rotation rings or the surfaces of the yoke facing the rotational surfaces of the rotation rings.

**20.** The magnetorheological fluid rotational load device of claim 1, wherein (1) protrusion patterns are formed on rotational surfaces of the rotation rings or surfaces of the yoke facing the rotational surfaces of the rotation rings, or
wherein (2) protrusion patterns are formed on the rotational surfaces of the rotation rings and the surfaces of the yoke facing the rotational surfaces of the rotation rings to face each other or alternate with each other.

**21.** The magnetorheological fluid rotational load device of claim 1, wherein protrusion patterns are formed in a plurality of regions on at least one of rotational surfaces of the rotation rings and surfaces of the yoke facing the rotational surfaces of the rotation rings.

**22.** The magnetorheological fluid rotational load device of claim 1, further comprising a bearing disposed on the housing and having inserted a body of the shaft therethrough to control a rotational friction force.

# FIG. 1

# FIG. 2

# FIG. 3

# FIG. 4

FIG. 5

# FIG. 6

No field

Applied field

140

10

11

150

11

(a)

magnetic field intensity

torque

(b)

# FIG. 7

# FIG. 8

# FIG. 9

# FIG. 10

# FIG. 11

300

390

320

310:315

331

389

330

380

346a

347a

349

340:340a

355

350:351

346b

349

347b

340:340b

355

350:352

348

340:340c

310:311

# FIG. 12

# FIG. 13

# FIG. 14

(a)

(b)

(c)

(d)

# FIG. 15

(a)

(b)

# FIG. 16

(a)

(b1)         (b2)         (b3)

# FIG. 17

input 10Hz

TORQUE (mN·m)

3
2.5
2
1.5
1
0.5
0

—○— HIGH VISCOSITY
—●— STANDARD

NO LOAD    3V    5V

(a)

input 100Hz

TORQUE (mN·m)

3
2.5
2
1.5
1
0.5
0

—○— HIGH VISCOSITY
—●— STANDARD

NO LOAD    3V    5V

(b)

# FIG. 18

140

150    11

PRE INPUT SIGNAL

140

11'    150

# FIG. 19

# FIG. 20

# FIG. 21

# FIG. 22

# FIG. 23

(a)

(b)

(c)

## INTERNATIONAL SEARCH REPORT

| International application No. |
| --- |
| **PCT/KR2021/010113** |

**A.    CLASSIFICATION OF SUBJECT MATTER**

**G06F 3/0362**(2013.01)i; **G06F 3/038**(2006.01)i; **H01H 19/14**(2006.01)i

According to International Patent Classification (IPC) or to both national classification and IPC

**B.    FIELDS SEARCHED**

Minimum documentation searched (classification system followed by classification symbols)

G06F 3/0362(2013.01); B60G 13/06(2006.01); B60R 16/00(2006.01); F15B 13/044(2006.01); F15B 15/06(2006.01); F15B 21/06(2006.01); F16C 33/76(2006.01); F16F 9/53(2006.01); G06F 3/01(2006.01); H02N 11/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 자기유변유체(magnetorheological fluid), 샤프트(shaft), 입자(particle), 점도 (viscosity)

**C.    DOCUMENTS CONSIDERED TO BE RELEVANT**

| Category* | Citation of document, with indication, where appropriate, of the relevant passages | Relevant to claim No. |
| --- | --- | --- |
| X | KR 10-1627173 B1 (KOREA UNIVERSITY OF TECHNOLOGY AND EDUCATION INDUSTRY-UNIVERSITY COOPERATION FOUNDATION) 03 June 2016 (2016-06-03) See paragraphs [0016]-[0017], [0044]-[0045] and [0057]-[0067]; claim 1; and figures 1-6 and 11. | 1,5-7,11-15 |
| Y | | 2-3,16-17,22 |
| A | | 4,8-10,18-21 |
| Y | KR 10-1635453 B1 (YEONHAB PRECISION CO., LTD.) 20 July 2016 (2016-07-20) See paragraph [0037]; claim 1; and figures 3-6. | 2-3,16-17,22 |
| A | KR 10-0836173 B1 (INHA UNIVERSITY RESEARCH AND BUSINESS FOUNDATION) 09 June 2008 (2008-06-09) See paragraphs [0040]-[0054]; claim 1; and figure 3. | 1-22 |

✓ Further documents are listed in the continuation of Box C.        ✓ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **01 November 2021** | **01 November 2021** |

| Name and mailing address of the ISA/KR | Authorized officer |
| --- | --- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

International application No.

**PCT/KR2021/010113**

### C.    DOCUMENTS CONSIDERED TO BE RELEVANT

| Category* | Citation of document, with indication, where appropriate, of the relevant passages | Relevant to claim No. |
|---|---|---|
| A | KR 10-1341089 B1 (YEONHAB PRECISION CO., LTD.) 19 December 2013 (2013-12-19)<br>See paragraphs [0032]-[0038]; claim 1; and figure 1. | 1-22 |
| A | KR 10-2012-0016734 A (HYUNDAI ROTEM COMPANY) 27 February 2012 (2012-02-27)<br>See paragraphs [0027]-[0041]; claim 1; and figure 2. | 1-22 |

Form PCT/ISA/210 (second sheet) (July 2019)

## INTERNATIONAL SEARCH REPORT
### Information on patent family members

| International application No. |
|---|
| **PCT/KR2021/010113** |

| Patent document cited in search report | | | Publication date (day/month/year) | Patent family member(s) | | | Publication date (day/month/year) |
|---|---|---|---|---|---|---|---|
| KR | 10-1627173 | B1 | 03 June 2016 | None | | | |
| KR | 10-1635453 | B1 | 20 July 2016 | None | | | |
| KR | 10-0836173 | B1 | 09 June 2008 | None | | | |
| KR | 10-1341089 | B1 | 19 December 2013 | US | 2015-0011918 | A1 | 08 January 2015 |
| | | | | US | 9245454 | B2 | 26 January 2016 |
| KR | 10-2012-0016734 | A | 27 February 2012 | KR | 10-1190100 | B1 | 11 October 2012 |

Form PCT/ISA/210 (patent family annex) (July 2019)